# EUROPEAN PATENT APPLICATION

(11) **EP 1 661 460 A1**
(43) Date of publication of application: **31.05.2006**
(21) Application number: 04771814.3
(22) Date of filing: 10.08.2004
(51) Int. Cl.: A01N 59/06, A01N 25/34, A01N 61/00, D01F 1/10, D01F 8/04

(54) **ANTIVIRAL AGENT AND FIBERS AND ANTIVIRAL MEMBERS USING THE SAME**

(30) Priority: 12.08.2003 JP 2003292073; 02.12.2003 JP 2003402529
(71) Applicant: Mochigase Electric Technical Co., Ltd., Yazu-gun, Tottori-ken 689-1201 (JP); Otsuki, Koichi, Tottori-shi, Tottori 680-0941 (JP)
(72) Inventor: OTSUKI, Koichi, Tottori-shi, Tottori 6800941 (JP); ITO, Toshihiro, Tottori-shi, Tottori 6800945 (JP); MURASE, Toshiyuki, Tottori-shi, Tottori 6890202 (JP); ITO, Hiroshi, Tottori-shi, Tottori 6800913 (JP); WAKABAYASHI, K., Mochigase Electr. Equipm. Co. Ltd, Yazu-gun, Tottori 689-1201 (JP); YAKURA, Masami, Mochigase Electr. Equipm. Co. Ltd, Yazu-gun, Tottori 689-1201 (JP); YAMANA, Hideaki, Mochigase Electr. Equipm. Co. Ltd, Yazu-gun, Tottori 689-1201 (JP)
(74) Representative: HOFFMANN EITLE
(86) International application number: PCT/JP2004/011853
(87) International publication number: WO 2005/013695

(57) **Abstract**

An antiviral agent having been experimentally supported which contains a powder obtained by baking (calcining) dolomite and hydrating a part thereof. Thus, it is possible to provide an antiviral agent which is usable in masks, filters, etc. because of acting directly on viral particles, thus eliminating the infectious capacity of the virus and preventing the invasion of the virus into cells; and a mask and a filter with the use of the antiviral agent.

## Description

### Technical field

This invention relates to an antiviral agent particularly effective to viruses such as coronaviruses and a fabric and an antiviral member supporting the antiviral agent.

### Background of the invention

For example, JP Kokai H8-333271 discloses a mask composed of a non-woven fabric coated with an extract from green tea for the purposes of its easy mass production, high virus-collecting ability, deactivating viruses, and preventing viruses from resplashing.

Furthermore, JP Kokai H5-115572 discloses a mask that is composed of at least one filtering layer having many open micropores layered on a gauze supporting particles of calcium phosphate having a calcium/phosphorus ratio of 1.0 to 2.0 and that has an inhalation resistance of 5.0 mm H₂O or less. This mask can collect bacteria, viruses, cells of animals and plants, toxic gas, stinkers, dust, mist and pollen in air and is pervious to other components.

Although the above-mentioned masks have experimental evidence indicating that these masks can protect bacteria in air, no experimental evidence indicating antiviral effects is disclosed.

Moreover, enzyme inhibitors have recently been developed as antiviral agents that are effective to Sevier Acute Respiratory Syndrome (SARS) virus and influenza virus . However, these are effective to only animals of which cells become infected with by viruses, but are not able to deprive an infectious capability of viruses by attacking virus particles directly.

In order to solve the above-mentioned problems, an object of the present invention is to provide an antiviral agent that is proved experimentally to be effective for protecting human cells from the attack of viruses and that can be successfully applied to antiviral members such as a mask and a filter, and a fabric and an antiviral member supporting the antiviral agent.

### Disclosure of the invention

An antiviral agent according to claim 1 contains powdered oxide and/or hydroxide.

Hereinafter, the term "oxide and/or hydroxide" means either oxide or hydroxide, or both of oxide and hydroxide.

Oxide is converted to hydroxide by contact with water (hydration or slaking) and hydroxide is converted to oxide by dehydration.

Such oxide and/or hydroxide can be prepared by partial hydration of calcined minerals or calcined shells, chemical synthesis, or any other means.

In the antiviral agent according to claim 2, the oxide and/or hydroxide according to claim 1 include calcium and/or magnesium.

In the antiviral agent according to claim 3, the powdered oxide and/or hydroxide according to claim 1 is made of a carbonate mineral.

Examples of the "carbonate mineral" described in this specification include carbonate minerals such as calcite, aragonite and other carbonates mainly composed of calcium (more specifically CaCO₃), and carbonate minerals such as dolomite and other carbonate salts mainly composed of calcium and magnesium (more specifically CaMg(CO₃)₂).

In the antiviral agent according to claim 4, the carbonate minerals in the antiviral agent according to claim 3 is composed of calcium and/or magnesium.

The antiviral agent according to claim 5 includes a powder that is prepared by partial hydration of calcined dolomite.

A fabric according to claim 6 supports the antiviral agent according to any one of claims 1 to 5.

The term "fabric" used in the specification includes both woven fabric and non-woven fabric.

Methods for supporting the antiviral agent according to any one of claims 1 to 5 on or in a fabric include coating of the antiviral agent on the surface of fabric with an adhesive and compounding a plastic resin with the antiviral agent.

An exemplary method includes mixing the antiviral agent according to any one of claims 1 to 6, an adhesives, such as a urethane adhesive, water, and a dispersant, if necessary, to prepare an aqueous dispersion containing the partially dissolved antiviral agent, dipping a fabric in this dispersion, and drying the fabric.

An example of the constituent of the fabric is a conjugated fabric consisting of a hollow fiber made of plastic material, for example, polyethylene in which the antiviral agent according to any one of claims 1 to 5 is dispersed, and a core of resin, for example, polypropylene.

An antiviral member according to claim 7 comprises the fabric according to claim 6.

Examples of the antiviral member include masks, air cleaning filters for air conditioners, gloves, sheets, curtains, and wears such as aprons, white robes, and protective cloths.

The antiviral agent according to one of claims 1 to 5 further comprises a solvent.

The term "solvent" used herein denotes alcohols, such as methyl alcohol, ethyl alcohol, and isopropyl alcohol; water; mixture of water and alcohol. These solvents may contain chlorhexidine, benzalkonium chloride, benzethonium chloride, alkylpolyamino ethylglycine, and other amphoteric surfactants.

An antiviral member according to claim 9 comprises a vessel filled with the antiviral agent according to claim 8.

In the antiviral member according to claim 10, the vessel is a spraying bottle.

Since the antiviral agent according to one of claims 1 to 5 can prevent viruses from penetrating human cells, the antiviral agent can be applied to masks, air cleaning filters for air conditioners, gloves, sheets, curtains, wears such as aprons, white robes, and protective cloths.

The fabric according to claim 6 supports the antiviral agent according to any one of claims 1 to 5, so that viruses are deactivated by contact with the fabric when passing through the fabric.

Therefore, using the fabric for the antiviral member can prevent persons from infection by coronaviruses and influenza viruses.

The antiviral member according to claim 7 comprises the fabric according to claim 6, so that the antiviral member can prevent persons from influence of SARS viruses and influenza viruses.

For example, if antiviral goods such as masks, air cleaning filters for air conditioners, gloves, sheets, curtains, and wears such as aprons, white robes, and protective cloths are produced using the fabric according to claim 6, corona viruses and influenza viruses that come into contact with these antiviral members are deactivated and, thus, lose an ability to attack people.

Therefore, wearing clothes such as gloves, sheets, aprons, white robes and protective cloths that are made of the fabric according to claim 6 can protect persons from SARS viruses and influenza viruses.

For example, if masks and air cleaning filters for air conditioners are produced using the fabric according to claim 6, corona viruses and influenza viruses are deactivated by contact with these antiviral members and, thus lose an ability to attack a person.

Therefore, when the air cleaning filter made of the fabric described in claim 6 is installed in an air conditioner, an influence by SARS virus as well as an influenza virus can be prevented.

The antiviral agent according to claim 8 is contained in a vessel. Clothes and other components are dipped in the antiviral agent to provide antiviral effect to clothes and other components and to removes viruses from contaminated clothes. Alternatively, the antiviral agent is stocked in a spraying bottle to spray the composition on a place that is contaminated with viruses.

Since the antiviral agent in the antiviral member is nonvolatile, the antiviral agent can retain an antiviral effect for a long time in clothes and in environments contaminated with viruses.

The antiviral member according to claim 9 comprises the antiviral agent according to claim 8 in a spraying bottle, therefore, removal of viruses can be accomplished by spraying the antiviral agent on an environment that is likely contaminated with viruses.

Since the antiviral agent in the antiviral member is nonvolatile, it can retain an antiviral effect for a long time in an environment that is likely contaminated with viruses.

The place on which the antiviral agent in the antiviral member is sprayed is lightly dusted with white powder. Since this place can be readily distinguished from a place on which the antiviral agent according to the present invention is not sprayed, the antiviral agent can be easily sprayed on places that are likely contaminated with viruses.

The place on which the antiviral agent in the antiviral members is sprayed can be restored to the original state by mopping.

### Brief Description of Drawings

Fig. 1 shows a table of the results of experiments to evaluate an effect of an antiviral agent according to the present invention.
Fig. 2 is an explanatory table for the samples used for experiments to evaluate an effect of an antiviral agent according to the present invention.
Fig. 3 is a table of experimental results of an antiviral agent according to the present invention.
Fig. 4 is a table of experimental results of the effect of an antiviral agent according to the present invention.
Fig. 5 is an x-ray diffraction pattern showing a chemical composition of dolomite used in the present invention.
Fig. 6 is an x-ray diffraction pattern showing a chemical composition of calcined dolomite.
Fig. 7 is an x-ray diffraction pattern showing a chemical composition of a powder (antiviral agent according to the present invention) prepared by partial hydration of calcined dolomite.
Fig.8 (a) and Fig.8 (b) are perspective views showing masks to which the antiviral agent is applied.
Fig. 9 includes schematic sectional views illustrating a filtering member 2 of the mask 1 in Fig. 8(a); Fig. 9 (a) is a schematic view of the mask that blocks dust, pollen, bacteria, and viruses in air; and Fig. 9(b) is a schematic view of the mask that blocks bacteria, viruses and splashing spittle from persons to the outside.

### Best Mode of the Invention

In order to describe the present invention in detail, an antiviral agent, a mask and a filter using the antiviral agent will be describe with reference to the attached drawings.

### (First Embodiment)

Hereinafter, a method manufacturing an antiviral agent will be explained.

In this embodiment, dolomite is used as a starting material.

First, dolomite is calcined under atmospheric pressure.

Calcination is performed at a temperature in the range of 700°C to 1,300°C, preferably, 700°C to 1,100°C, for 14 hours to 15 hours.

When dolomite is heated at a temperature higher than 1,300°C, the resulting material becomes glass. In order to prevent dolomite from being vitrified, the firing temperature for calcination should be 700°C to 1,300°C, preferably, 700°C to 1,100°C.

That is, it is preferred that the calcined material is heated lightly rather than fired severely.

Through these processes, a material mainly composed of calcium oxide (CaO) and magnesium oxide (MgO) is prepared.

Water is poured to the calcined dolomite within a time the material is still at high temperatures to partially hydrate (slake) the dolomite. The water content of the partially slaked material is preferably in the range of 3w/w% to 7w/w%.

The calcined and partially hydrated dolomite is pulverized into an average particle size of 0.1 µm to 60 µm with a mill such as a ball mill (dry mill and/or wet mill) or is sieved into an average particle size of 0.1 µm to 60 µm through a sieve. Calcined and partially hydrogenated dolomite having a particle size of more than 60 µm shows a tendency that the antiviral effect is lowered. Electron microscopic observation of the calcined and partially hydrated dolomite shows a mixed state consisting of primary particles and secondary particles being agglomerates of primary particles. It is found that the average particle size of the above-mentioned particles corresponded to the average size of the secondary particles and the average particle size of the primary particles is 1 nm to 200 nm.

The crude dolomite contained 31 to 35 weight % of calcium carbonate (converted to calcium oxide), 17 to 20 weight % of magnesium carbonate (converted to magnesium oxide), and 44 to 47 weight % of weight loss component after ignition in total weight of dolomite. Both first and second endothermic peaks of the crude dolomite by differential thermal analysis appear in the respective endothermic temperature ranges of dolomite yielded in Japan.

The calcined and partially hydrated dolomite contained 24.0 to 28.0 weight % of ignition loss component, 0.001 to 1.0 weight % of insoluble residue (mostly SiO₂), 0.001 to 1.0 weight % of iron oxide and aluminum oxide (Fe₂O₃ and Al₂O₃), 40 to 55 weight % of calcium oxide (CaO), and 23 to 30 weight % of magnesium oxide (MgO).

### (Second Embodiment)

The testing method for antiviral effects and the results are shown for the powder which was prepared by partial hydration (slaking) of the dolomite in the first embodiment.

A solution (hereinafter referred to as "testing solution") was prepared by dissolving or dispersing 12 weight % of dolomite powder prepared by partial hydration (slaking) of the dolomite in the first embodiment and 5 % weight % of urethane polymer into deionized water.

The urethane polymer as an adhesive was added to facilitate adhesion between powder and fabric. A dispersant may be added, if necessary, in order to prevent the calcined and partially hydrated dolomite powder from precipitation.

Viruses examined were an infectious bronchitis virus, Boated 42 strain (Coronaviridae); Newcastle disease virus, La Sota strain (Paramyxoviridae); influenza type A virus, Aichi/2/68 (H3N2) (human strain); and influenza type A virus, Cygnus columbianus/Shimane/499/83 3 (H5N3) (avian strain).

### (Testing Method 1)

Into a sterile test tube, 0.9 ml of each virus solution and 0.1 ml of the testing solution were placed, mixed thoroughly, and allowed to stand for 10 minutes at 4°C.

Then, 0.09 ml of this mixture of the virus solution and the testing solution was added dropwise into a test tube containing 0.81 ml of a diluted solution of PBS (phosphate buffered saline, pH = 7.2) to dilute the mixture to one-tenth. This operation was repeated nine times to prepare 10⁻¹, 10⁻², 10⁻³, 10⁻⁴, 10⁻⁵, 10⁻⁶, 10⁻⁷, 10⁻⁸, and 10⁻⁹ diluted solutions.

Urinary spaces of three SPF grown hen eggs (10 days) were inoculate with each diluted virus solution (0.2 ml).

The grown eggs were further inoculated for 3 days (6 days for infectious bronchitis virus) at 37°C.

The eggs were tested everyday. If the chick embryo stopped growth within 24 hours after virus inoculation, this sample was removed from the experiments.

With a reference solution containing a phosphate buffer saline (pH = 7.2) instead of the mixture of the virus solution and the testing solution, the same experiment was performed.

The inoculated eggs were placed in a refrigerator overnight.

On the following day, a urinary solution was collected from each sample other than the egg inoculated with infectious bronchitis virus and was mixed with a 0.5% chicken blood erythrocyte solution to observe coagulation of blood erythrocyte. This is because that the influenza virus and Newcastle disease virus can coagulate chicken blood erythrocyte.

The antiviral effect was evaluated by the virus titer from the coagulation of the chicken blood erythrocyte of each inoculated egg. The virus titer was determined by the Reed and Muench method (Reed, L, J., Muench, H.: A simple method of estimating fifty percent endopoints. Am. J. Hyg. 27, 493-497(1938)).

The virus titer for the infectious bronchitis virus was determined by visual observation of characteristic morphology of chicken embryo, i.e., decreased embryo growth (growth retardation) and embryo curling.

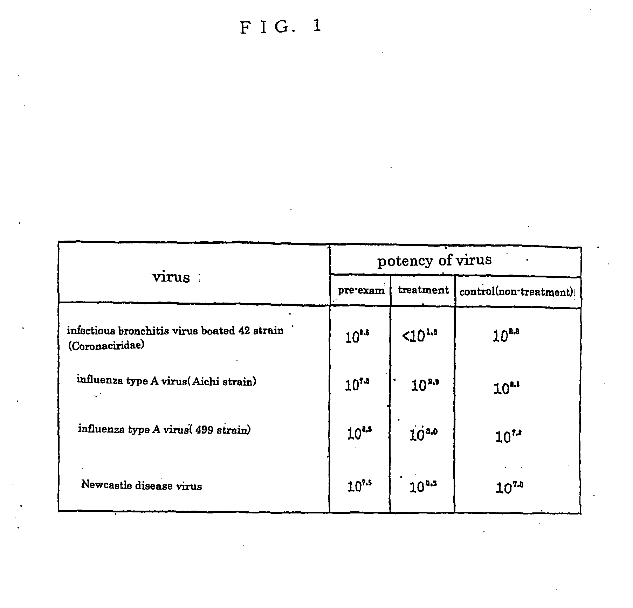

The results are shown in Fig. 1.

The result in Fig. 1 indicates that the solution containing 1.2 weight % of calcined and partially hydrated dolomite can reduce the infectiousness that induces an infectious respiratory disease for all animals examined and for a person to less than 1/100,000 by only 10 minutes mixing.

### (Comparative Embodiment)

In place of the mixture of the virus solution and the testing solution, a dispersive solution containing 5 weight % of urethane polymer dissolved in pure water was prepared, and 0.09 ml of this solution was added dropwise into a test tube containing 0.81 ml of a diluted solution of PBC (phosphate buffer saline, pH = 7. 2) to dilute the solution to one-tenth. This operation was repeated nine times to prepare 10⁻¹, 10⁻², 10⁻³, 10⁻⁴, 10⁻⁵, 10⁻⁶, 10⁻⁷, 10⁻⁸, and 10⁻⁹ diluted solutions.

The sample was tested as in Testing Method 1. No antiviral effect was observed.

### (Third Embodiment)

The sample was tested as in Testing Method 1 except that the calcined and partially hydrated dolomite powder was replaced with slaked lime.

Although the slaked lime also showed an antiviral effect, the calcined and partially hydrated dolomite powder exhibits more noticeable antiviral effect than the slaked lime.

### (Fourth Embodiment)

The sample was tested as in Testing Method 1 except that the calcined and partially hydrated dolomite powder was replaced with calcined and partially hydrated shell powder.

The calcined and partially hydrated shell powder also showed antiviral effect.

### (Fifth Embodiment)

An exemplary method of producing a woven or nonwoven fabric that supports powder of calcined and partially hydrated dolomite, and an antiviral member(mask in this example) made of this fabric that supports powder of calcined and partially hydrated dolomite will now be described.

A solution is prepared by dissolving or dispersing powder of calcined and partially hydrated dolomite, urethane polymer and a dispersant, if necessary, in water.

A woven or nonwoven fabric is immersed in the solution and is dried.

Through the process mentioned above, a woven or nonwoven fabric supporting powder of calcined and partially hydrated dolomite is produced.

Then, a mask is produced with this woven or nonwoven fabric supporting powder of calcined and partially hydrated dolomite.

Since this mask consists of a fabric supporting powder of calcined and partially hydrated dolomite, wearing the mask prevents the infection from Sevier Acute Respiratory Syndrome (SARS) viruses and influenza viruses.

### (Sixth Embodiment)

An exemplary method of producing a fiber for a woven or nonwoven fabric that supports powder of calcined and partially hydrated dolomite, and a mask made of this fabric that supports powder of calcined and partially hydrated dolomite will now be described.

Polyethylene pellets and powder of calcined and partially hydrated dolomite are compounded.

A plastic molding machine for producing conjugate fiber is prepared.

The plastic molding machine comprises an inner nozzle and an outer nozzle that are concentrically set at the leading end of the molding machine. A plastic resin fed from a first hopper is extruded from the outer nozzle, and a plastic resin fed from a second hopper is extruded from the inner nozzle. The mixture of polyethylene pellets and powder of calcined and partially hydrated dolomite is supplied to the first hopper.

Polyethylene pellets used for manufacturing a core is supplied to the second hopper.

Melted polyvinylchloride resin is injected or extruded from the inner nozzle and polyethylene containing dispersed powder of calcined and partially hydrated dolomite is injected or extruded from the outer nozzle provided at the end of the plastic molding machine, and these resins are extended to produce a conjugate fiber consisting of a hollow fiber composed of polyethylene containing dispersed powder of calcined and partially hydrated dolomite and a polypropylene core.

From this conjugate fiber, a filter is finally produced.

This filter includes a fabric supporting powder of calcined and partially hydrated dolomite. An air cleaner in an air conditioner having this filter can kill coronaviruses and influenza viruses passing through the air cleaner.

Therefore, using the filter in air cleaners in air conditioners can prevent persons from infection by Sevier Acute Respiratory Syndrome (SARS) virus and influenza viruses.

This embodiment describes the use of a conjugate fiber consisting of a core made of polypropylene and a hollow fiber made of a mixture of pelletized polyethylene and powder of calcined and partially hydrated dolomite; however, it should be noted that a one-piece fiber containing powder of calcined and partially hydrated dolomite may also be used solely. Furthermore, resins other than polypropylene and polyethylene may be used.

### (Seventh Embodiment)

In this example, an example of usage of the antiviral agent is described according to the present invention.

The calcined and partially hydrated dolomite is pulverized in a mill such as a ball mill (wet mill) into 0.1µm to 1 µm on average secondary particle size to prepare slurry.

The antiviral agent is placed in a spraying bottle, and a solvent is added thereto.

The content of the antiviral agent in the solution according to the present invention is preferably at least 0.1% and more preferably at least 0.2%.

The content of the antiviral agent in the solution according to the present invention is more preferably 0.2% to 2%.

The sufficient antiviral effect is not sufficient if the content of the antiviral agent is less than 0.1%.

When the content of the antiviral agent in the solution is 0.2% or more, sufficient antiviral effect can be expected.

A content of the antiviral agent exceeding 2% causes an inevitable alkaline issue rather than the antiviral effect.

The upper limit of the content of the antiviral agent according to the present invention in the solution is, but not limited to, 25% in consideration of the concentration of the slurry.

The solvent may be water, and alcohol, such as methyl alcohol, ethyl alcohol, or isopropyl alcohol, or a mixture of water and alcohol.

The solvent in the spaying bottle may contain chlorhexidine, benzalkonium chloride, benzethonium chloride, alkylpolyamino ethylglycine, and other amphoteric surfactants.

As a result, part of the antiviral agent according to the invention is ionized and the residue is precipitated in the bottle.

Before spraying, a user shakes the spraying bottle. In this manner, water and the precipitated antiviral agent according to the invention are mixed together making white suspension in the spraying bottle.

The white suspension is sprayed in a place that is likely contaminated with viruses.

In the place that is likely contaminated with viruses, alcohols or sodium chlorite solutions are usually sprayed. Since alcohols are volatile, constant antiviral effect can not be expected. Comparing with these liquids, the antiviral agent composed of powder of calcined and partially hydrated dolomite is nonvolatile. Thus, the constant antiviral effect is ensured when the white suspension according to the present invention is sprayed in the place that is likely contaminated with viruses.

Furthermore, a place where the white suspension is sprayed indicates have a white bloom, so that it is easy to distinguish the places where the antiviral agent has been already sprayed from other places. Thus, a user can easily spray the antiviral agent onto a place which is likely contaminated with viruses.

The place where the white suspension was sprayed can be recovered to the original state by mopping.

When the white suspension is sprayed on the outer surface of a commercial mask, this mask can function as a particular mask that can prevent infection of Sevier Acute Respiratory Syndrome (SARS) virus and influenza viruses.

In this example, a spraying bottle is described as an example of the vessel. Clothes or another member may be dipped in a vessel containing the antiviral agent according to the present invention and water so that the clothes and the other member have antiviral effects or viruses are removed from the clothes and the other member.

It should be noted that any conventional spraying bottle such as a pumping-type bottle and pressurized-type bottle using gas such as gaseous ethylene can be applied without any limitation.

### (Eighth Embodiment)

In this embodiment, the antiviral effect was compared between the antiviral agent according to the present invention and the other inorganic substances.

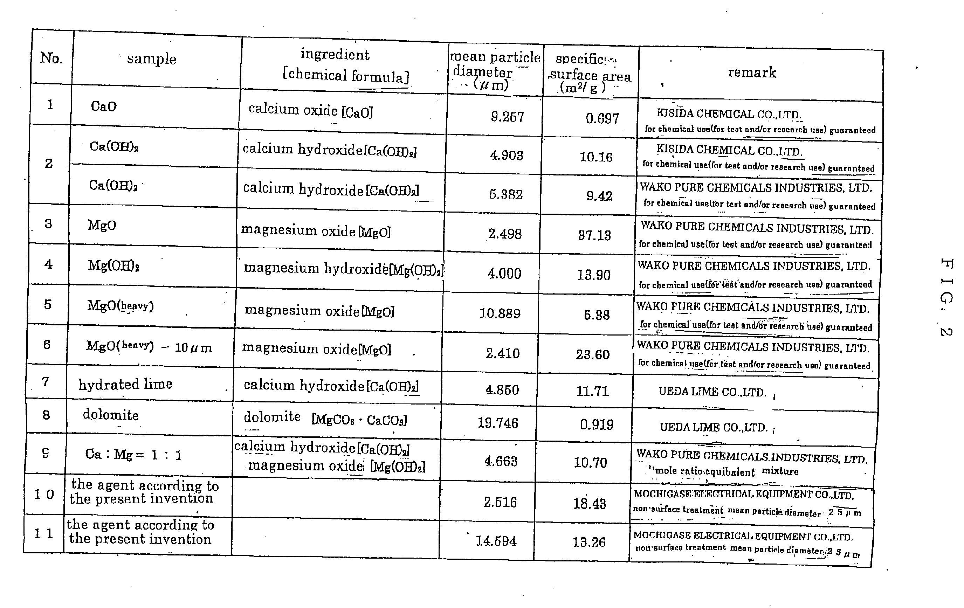

Samples shown in Fig. 2 were prepared.

In Fig. 2, Samples 10 and 11 are the antiviral agents according to the present invention.

Fig. 2 includes the composition (chemical formula), the average particle size (µm), and the specific surface area (m²/g) of each sample. Fig. 2 further includes the supplies and the grade of each sample in the column "Remarks".

Next, 0.1 ml of suspension or solution of each sample shown in Fig. 2 was placed into a 1.5 ml micro tube, and 0.9 ml of virus solution (influenza type A virus, Cygnus columbianus/Shimane/499/83 (H5N3) (avian strain)) was added to the micro tube. The final concentration was adjusted to be 0.3% or 0.17%.

Ten minutes later, 90 µl of each resulting virus solution was added dropwise into 0.81 ml of a diluted solution of PBS (phosphate buffered saline, pH = 7.2) to dilute the solution to one-tenth. This operation was repeated nine times to prepare 10⁻¹, 10⁻², 10⁻³, 10⁻⁴, 10⁻⁵, 10⁻⁶, 10⁻⁷, 10⁻⁸, and 10⁻⁹ diluted solutions. These diluted solutions were tested.

Urinary spaces of three SPF grown hen eggs (10 days) were inoculate with each diluted virus solution (0.2 ml).

After the inoculation of the grown hen eggs with the diluted virus solution for three days, the urinary spaces were recovered and allowed to react with a 0.5% chicken blood erythrocyte solution to observe virus breeding by coagulation of blood erythrocyte.

The virus titer was determined by the Reed and Muench method (Reed, L, J., Muench, H.: A simple method of estimating fifty percent endopoints. Am. J. Hyg. 27, 493-497(1938)).

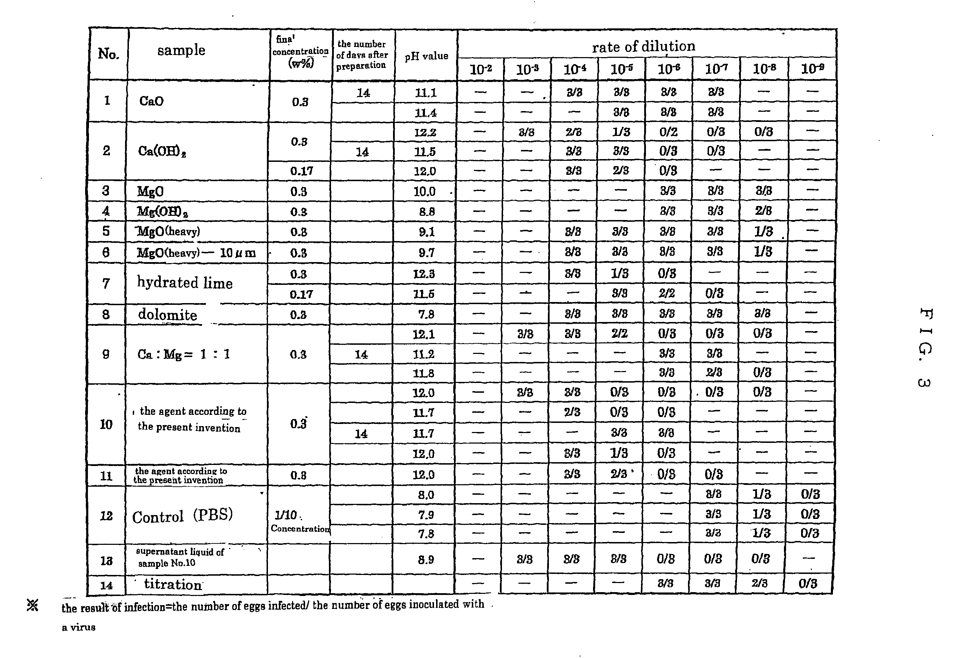

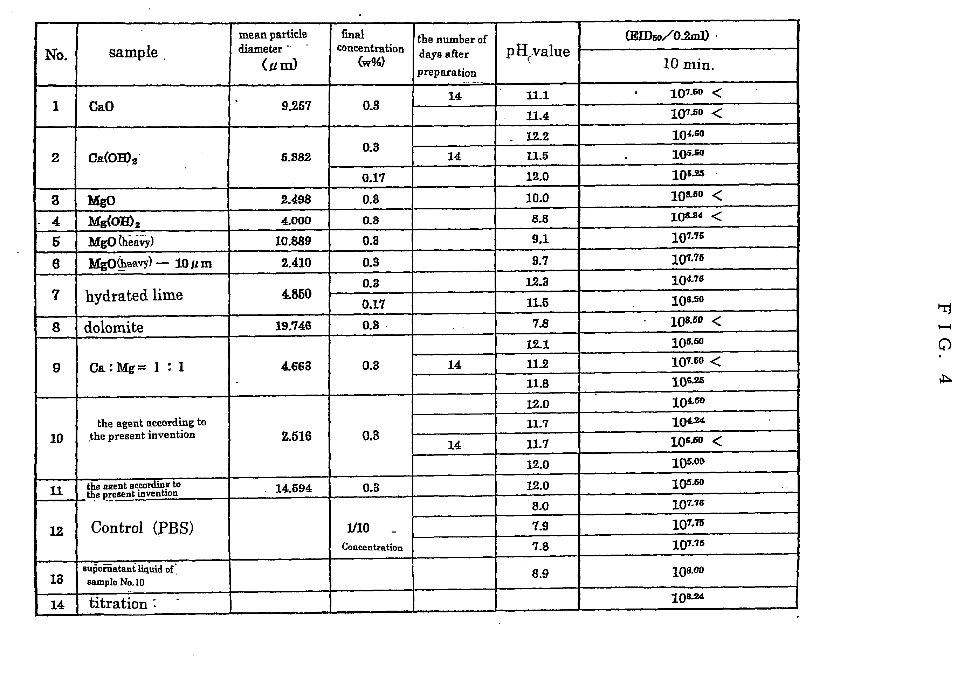

The results are shown in Figs. 3 and 4.

Equimolar mixtures of calcium hydroxide (Sample 2), calcium oxide (Sample 1), and slaked lime (Sample 7), with magnesium hydroxide were also tested.

The results showed that virus factors for a sample according to the present invention (Sample 10), calcium hydroxide (Sample 2) and another sample according to the present invention (Sample 11) were 10^{5.00}, 10^{1.50} and 10^{5.50}, respectively. Thus, these samples impair the infection factor compared with the other samples.

The virus factor of an equimolar mixture (Sample 19) of the calcium hydroxide and magnesium hydroxide was 10^{6.25}, and the virus factor of the slaked lime (Sample 7) was 10^{6.50}. The virus factor of the calcium oxide (Sample 1) was 10^{7.50}<.

### (Ninth Embodiment)

This embodiment shows the analytical result of chemical composition of dolomite used, the reaction when dolomite is heated, and the analytical result of the chemical composition of the antiviral agent according to the present invention.

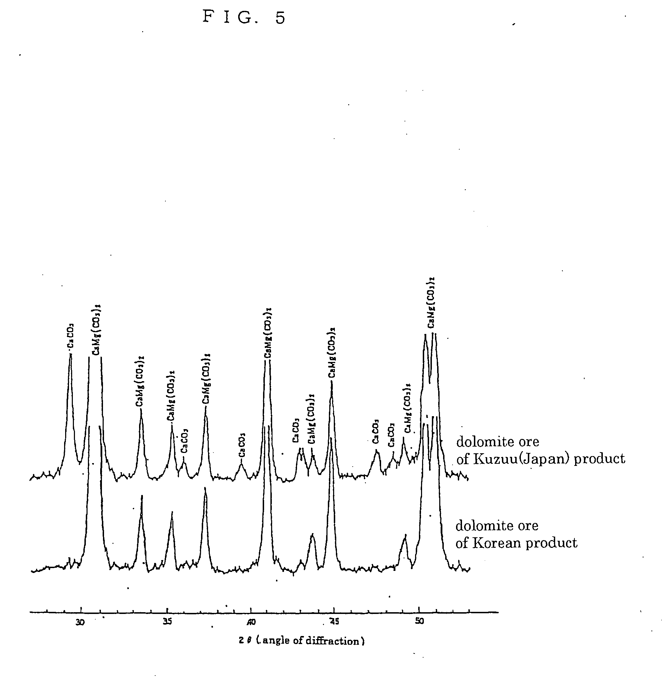

Fig. 5 illustrates the chemical composition of the dolomite used by X-ray diffractometry.

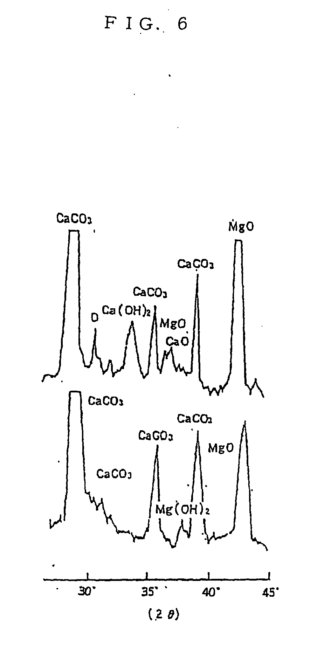

Fig. 6 illustrates the chemical composition of calcined dolomite by X-ray diffractometry.

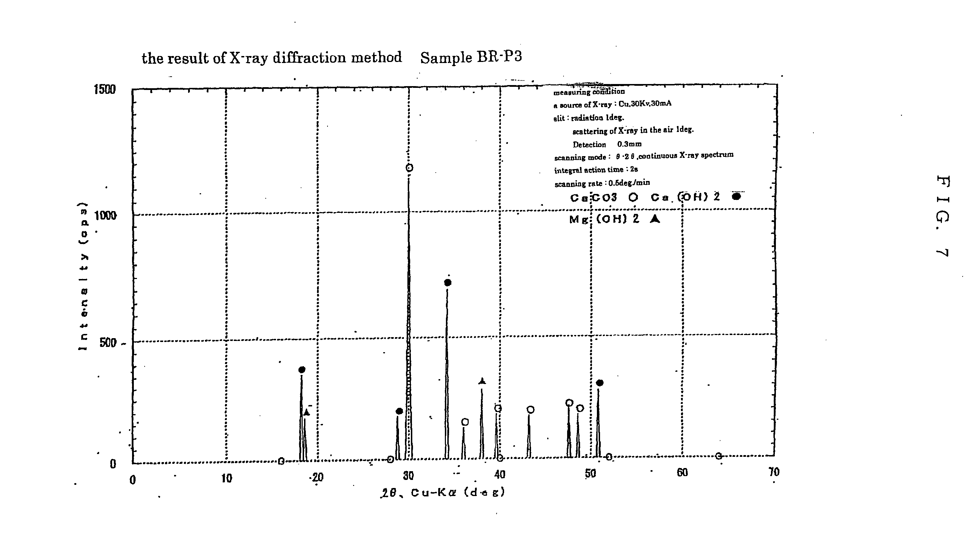

Fig. 7 shows the chemical composition of powder (antiviral agent according to the present invention) of calcined and partially hydrated dolomite by X-ray diffractometry.

When dolomite is heated, MgCO₃ is decomposed at a temperature between 750°C and 800°C as follows:

CaMg (CO₃)₂ → CaCO₃ + MgO + CO₂↑

In the next stage, CaCO₃ is decomposed at a temperature between 900°C to 1000°C as follows:

CaCO₃ + MgO → CaO + MgO + CO₂↑

Therefore, the antiviral effect of the powder of calcined and partially hydrated dolomite according to the present invention is probably caused by CaO that is formed during the calcinations of dolomite related to the invention. (Refer to the results of the antiviral test of Sample 1 shown in Figs. 3 and 4)

With reference to Fig.7, the X-ray diffraction pattern shows that the powder of calcined and partially hydrated dolomite (the antiviral agent according to the present invention) consists of CaCO₃, Ca(OH)₂ and Mg(OH)₂. This demonstrates that the powder prepared by partial hydration of the calcined dolomite consists of CaCO₃, Ca(OH)₂ and Mg(OH)₂.

However, the results of the antiviral test shown in Figs. 3 and 4 show that the samples (Samples 10 and 11) according to the present invention exhibits higher antiviral effects than Mg(OH)₂ (Sample 4) and the equimolar mixture (Sample 9) of Ca(OH)₂ and Mg(OH)₂. The results further show that the samples (Samples 10 and 11) according to the present invention have higher specific surface areas than CaO (Sample 1) exhibiting high antiviral effect regardless of sole use. These results suggest that an intermediate, such as a mixture containing MgO•CaCO₃, a mixture containing MgO, Mg(OH)₂, Ca(OH)₂, and CaCO₃, or a mixture containing Ca(OH)₂ and CaCO₃, formed during the calcination of the dolomite exhibits high antiviral effect, unlike the antiviral effect by CaO.

### (Tenth Embodiment)

An exemplary antiviral member (a mask supporting the antiviral agent according to the present invention) according to the present invention will now be described.

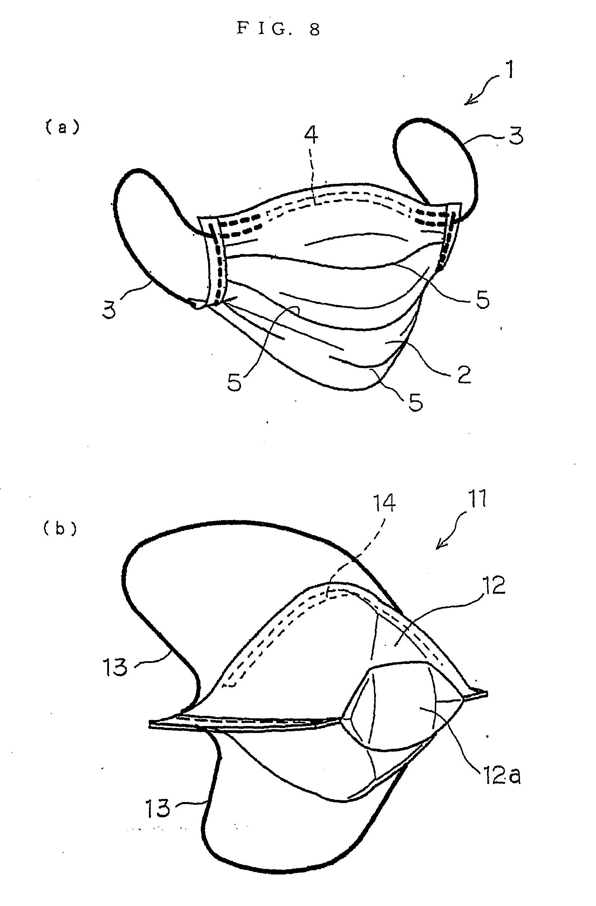

Figs. 8 (a) and 8 (b) are perspective views of typical masks according to the invention.

A mask 1 in Fig. 8 (a) comprises a filter 2, straps 3 (in this example, a bandage made of elastomer such as rubber) provided at both sides of the filter 2 to support the mask at a pair of human ears, and a wire 4 provided inside the top of the filter 2.

The wire 4 can be deformed plastically to enhance sealability of the mask 1 along the ridge from the user's nose to chin.

Moreover, as shown in Fig. 8(a), the mask 1 has three pleats 5, 5, 5 in the horizontal direction of the filter 2 to enhance sealability along the contour of the user's face up to the lower portion of the chin.

A mask 11 illustrated in Fig. 8(b) includes a filter 12 and a pair of straps 13, 13 (in this example, a bandage made of elastomer such as rubber) that are provided as a linkage between both ends of a filter, and a wire 14 that is provided inside the top of the filter 12.

The wire 14, as well as the wire member 4, can be deformed plastically to enhance sealability along the ridge from user's nose to chin.

When a user wears the mask 11, one of the straps 13, 13 (in this example, a bandage made of elastomer such as rubber) is put so as to wind the user's neck and the other one is put so as to wind the back of the user's head.

In this mask 11, a filter 12 is shaped to be hemispherical and the middle of the filter 12 is concaved. The top of the filter 12 is wimpled so that the bottom portion 12a of the filter 12 is substantially square.

The mask 11 having such a shape and structure exhibits high sealability between the user's face and the mask 11 and facilitates breathing of the user.

The structure of the filter 2 of the mask 1 shown in Fig. 8(a) will now be described.

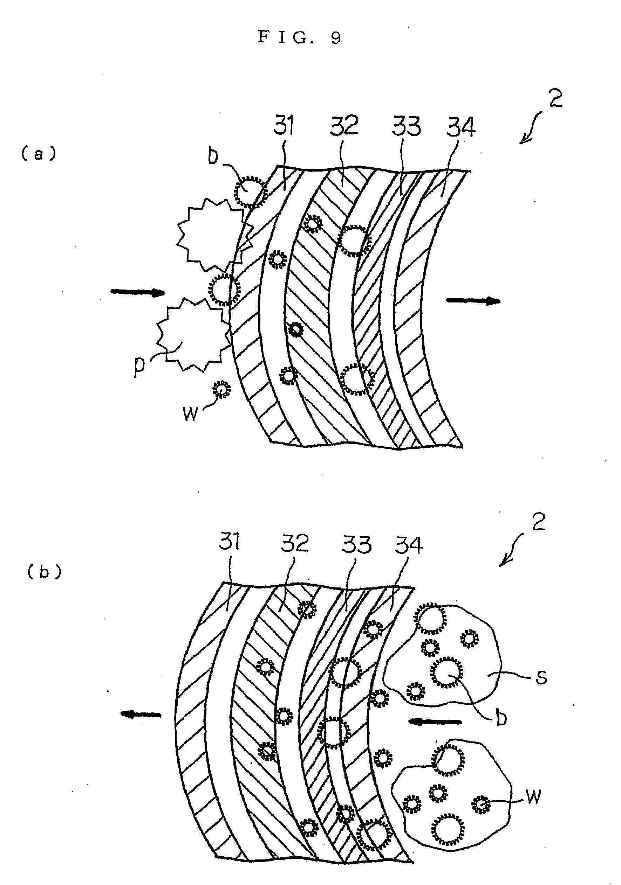

Fig. 9 is a cross-sectional view schematically shown the filter 2 of the mask 1 shown in Fig. 8(a).

Fig. 9 (a) schematically shows that the mask blocks dust, pollen p, bacteria b, and viruses w in air, and Fig. 9(b) schematically shows that the mask blocks bacteria b, viruses W, spit s splashed from a person toward the outside.

The filter 2 includes a first cover 31, a second cover 32, a third cover 33 and a forth cover 34.

The first cover 31 is placed at the outermost surface in use and mainly blocks dust, pollen p, bacteria b, and viruses w in air. In this embodiment, the first cover 31 is made of nonwoven fabric.

The second cover 32 is coated or mixed with the antiviral agent according to the present invention. In this embodiment, nonwoven fabric coated or mixed with the antiviral agent is used. The virus W is killed when passing through the second cover 32.

The third cover 33 is composed of a water-repellent filter. Furthermore, the third cover 33 has a small mesh size so that the third cover 33 can collect particles having a size of about 3 µm.

The material for the fourth cover 34 is similar to that for the first cover 31. In this example, a material free from irritating properties to the user's skin is used.

In this mask 1, the cover 33 and the cover 34 are provided adjacent to the user's skin so that the second cover 32 does not come in direct contact with the skin.

In the mask 1 shown in Fig. 8 (a), the first cover 31 blocks dust, pollen p, bacteria b, and viruses w in air, the second cover 32 kills viruses, the third cover 33 collect particles or droplets having a diameter of 1 µm to 51 µm, and the forth cover 34 protects the user's skin and collects larger droplets derived from coughing and sneezing by the user. Accordingly, this mask 1 prevents a person for sterilization or moving through a crowd from acquiring the infection by viruses during sterilization working or acquiring the infection by viruses in air during moving through the crowd.

When an infected person by a virus wears the mask 1, the chance of infection by droplets can be significantly decreased.

In the above description, the mask 11 is mainly described; however, the structure and the advantages of the filter 12 of the mask 11 shown in Fig. 8 (b) is the same as those of the filter 2 of the mask 1 and its antiviral effect; hence, the description of the filter 12 is omitted.

Since the mask 1 and the mask 11, including a filter that can blocks at least 95% of particle having a size of 0.3 µm or more, can comply with the standard of NIOSH (National Institute for Occupational Safety and Health) in the U.S.A., these masks can be called "N95 mask".

### Industrial Applicability

The mask according to the invention can prevent infection by Sevier Acute Respiratory Syndrome (SARS) viruses and influenza viruses.

## Claims

1. An antiviral agent comprising powdered oxide and/or hydroxide.

2. The antiviral agent according to claim 1, wherein the oxide and/or hydroxide comprises calcium and/or magnesium.

3. The antiviral agent according to claim 1, wherein the powdered oxide and/or hydroxide is made of a carbonate mineral.

4. The antiviral agent according to claim 3, wherein the carbonate mineral comprises calcium and/or magnesium.

5. An antiviral agent comprising a powder prepared by partial hydration of calcined dolomite.

6. A fabric supporting the antiviral agent according to any one of claims 1 to 5.

7. An antiviral member comprising the fabric according to claim 6.

8. The antiviral agent according to one of claims 1 to 5 further comprising a solvent.

9. An antiviral member comprising a vessel filled with the antiviral agent according to claim 8.

10. The antiviral member according to claim 9, wherein the vessel is a spraying bottle.
